# EUROPÄISCHE PATENTSCHRIFT

(11) **EP 3 344 679 B1**
(45) Veröffentlichungstag und Bekanntmachung des Hinweises auf die Patenterteilung: **09.10.2019**
(21) Anmeldenummer: 16785082.5
(22) Anmeldetag: 02.09.2016
(51) Int. Cl.: C08G 59/68, C08G 65/10

(54) **VERFAHREN ZUR FRONTALPOLYMERISATION KATIONISCH POLYMERISIERBARER MONOMERE**
METHOD FOR FRONTAL POLYMERIZATION OF CATIONICALLY POLYMERIZABLE MONOMERS
PROCÉDÉ DE POLYMÉRISATION FRONTALE DE MONOMÈRES POUVANT ÊTRE SOUMIS À UNE POLYMÉRISATION CATIONIQUE

(30) Priorität: 02.09.2015 AT 5762015
(43) Veröffentlichungstag der Anmeldung: 11.07.2018
(73) Patentinhaber: Technische Universität Wien, 1040 Wien (AT)
(72) Erfinder: LISKA, Robert, 2123 Schleinbach (AT); BOMZE, Daniel, 1190 Wien (AT); KERN, Wolfgang, 8700 Leoben (AT); KNAACK, Patrick, 1160 Wien (AT)
(74) Vertreter: Ellmeyer, Wolfgang
(86) Internationale Anmeldenummer: PCT/AT2016/060047
(87) Internationale Veröffentlichungsnummer: WO 2017/035551

(56) Entgegenhaltungen:
- EP-A2- 0 066 543
- WO-A2-2007/005280
- DE-A1- 3 230 960
- D. BOMZE ET AL: "Successful radical induced cationic frontal polymerization of epoxy-based monomers by C-C labile compounds", POLYMER CHEMISTRY, Bd. 6, Nr. 47, 1. Oktober 2015 (2015-10-01), Seiten 8161-8167, XP055331234, GB ISSN: 1759-9954, DOI: 10.1039/C5PY01451D
- ALBERTO MARIANI ET AL: "UV-ignited frontal polymerization of an epoxy resin", JOURNAL OF POLYMER SCIENCE PART A: POLYMER CHEMISTRY, Bd. 42, Nr. 9, 26. März 2004 (2004-03-26), Seiten 2066-2072, XP055331240, US ISSN: 0887-624X, DOI: 10.1002/pola.20051

## Beschreibung

Die vorliegende Erfindung betrifft ein neues Verfahren zur Frontalpolymerisation von kationisch polymerisierbaren Monomeren.

### STAND DER TECHNIK

Unter Frontalpolymerisation wird eine Variante von Polymerisationsreaktionen verstanden, bei der die Reaktionszone durch das polymerisierbare Material wandert. Wie bei klassischen Polymerisationsreaktionen wird in Abhängigkeit von der Art der Initiierung zwischen thermischer Frontalpolymerisation (TFP) und Photofrontalpolymerisation (PFP) unterschieden. Bei TFP kommt es theoretisch zu einer unbegrenzt lange andauernden Reaktion, solange unverbrauchtes reaktionsfähiges Monomer vorhanden ist. Bei PFP wird hingegen der Initiator durch die Initiierung ausgebleicht, wodurch die Eindringtiefe des Lichtes allmählich ansteigt und somit quasi eine Front entsteht. Diese ist aber stark in ihrer Reichweite eingeschränkt, und weiters muss die initiierende Strahlungsquelle während des gesamten Polymerisationsvorgangs aktiv sein.

Ein Beispiel für PFP offenbart Crivello et al., J. Polym. Sci. A Polym. Chem. 42(7), 1630-1646 (2003). Dabei wird ein kationischer Photoinitiator eingesetzt, auch als Photosäurebildner oder -generator bezeichnet, der bei Bestrahlung mit (üblicherweise ultraviolettem) Licht in einen angeregten Zustand übergeht, in dem sodann eine Bindung homo- oder heterolytisch gespalten wird, woraufhin von anderen Molekülen im Reaktionsgemisch, vorzugsweise von den kationisch zu polymerisierenden Monomeren, ein Wasserstoffatom abstrahiert wird, um mit dem Anion eine sog. Photosäure zu bilden. Bei Letzterer handelt es sich vorzugsweise um eine sehr starke Säure, wie z.B. eine Supersäure, die ihrerseits ein Monomer protoniert und so die kationische Polymerisation initiiert. In diesem speziellen Fall der Frontalpolymerisation wird durch Licht im gesamten Probekörper die Photosäure aktiviert und später durch einen externen thermischen Stimulus die Frontalpolymerisation ausgelöst. Nachteilig ist dabei, dass zuerst durch Licht der vollständige Probekörper durchstrahlt werden muss, was bei dickeren Teilen oder komplizierten Geometrien oft nur sehr schwer oder gar nicht möglich ist.

Ein Spezialfall von kationischer Polymerisation ist die Reaktionsführung als radikalisch induzierte kationische Polymerisation (RICP), bei der eine Kombination aus radikalischem Initiator und kationischem Initiator zum Einsatz kommt, seit einigen Jahren auch eine Kombination aus kationischem Photoinitiator und thermischem radikalischem Initiator: Nach wie oben beschriebener Initiierung der kationischen Polymerisation durch den kationischen Photoinitiator nach Bestrahlung an der Oberfläche des Formkörpers führt die bei der exotherm verlaufenden Polymerisationsreaktion frei werdende Reaktionswärme zur Zersetzung des thermischen Initiators unter Bildung von reaktiven Radikalen, die ebenfalls zur Spaltung des kationischen Initiators führen, wodurch weitere kationische Polymerisationsreaktionen in tieferen Schichten, und somit eine tatsächliche Frontalpolymerisation ausgelöst werden.

Bei Verwendung eines thermischen kationischen Initiators anstelle eines Photoinitiators wird eine analoge Kaskade durch anfängliche thermische Aktivierung mittels einer äußeren Wärmequelle in Gang gesetzt. Entsprechende Reaktionssysteme, die sowohl einen thermischen kationischen als auch einen als Co-Katalysator bezeichneten thermisch-radikalischen Initiator umfassen, werden beispielsweise in US-Patent 4.336.366 und in der darin zitierten Literatur offenbart. Als Co-Katalysatoren werden unter anderem Benzpinakol-Derivate offenbart und sind auch Gegenstand der dortigen Erfindung. Allerdings wird dort keine Frontalpolymerisation beschrieben.

Den vorliegenden Erfindern ist derzeit überhaupt nur eine einzige Arbeit bekannt, in der die Konzepte der radikalisch induzierten kationischen Polymerisation (RICP) und der Frontalpolymerisation (FP) zu radikalisch induzierter kationischer Frontalpolymerisation (RICFP) kombiniert werden, nämlich Mariani et al., "UV-ignited Frontal Polymerization of an Epoxy Resin", J. Polym. Sci. A Polym. Chem. 42(9), 2066-2072 (2004).

Bei derartiger Reaktionsführung unter Verwendung der oben erwähnten Kombination aus kationischem Photoinitiator und thermisch-radikalischem Initiator entsteht nach anfänglicher Bestrahlung mit UV-Licht und die dadurch bewirkte Auslösung der obigen Reaktionskaskade an der Grenzfläche zwischen bereits gebildeten Polymeren und noch nicht umgesetzten Monomeren eine Front, in der kontinuierlich neue kationische Polymerisationsreaktionen ausgelöst werden, solange deren Wärmeentwicklung ausreicht, um den thermischen Initiator zu zersetzen, und dieser seinerseits den kationischen Initiator aktiviert und daher mitunter auch als "Aktivator" für den Photoinitiator bezeichnet wird. Ausreichende Mengen der beiden Initiatoren vorausgesetzt, wandert diese Front durch das gesamte zu polymerisierende Gemisch, bis die Polymerisation in Ermangelung weiterer nichtumgesetzter Monomere abbricht.

Wie dies dem Fachmann bekannt ist, sind gängige kationische Photoinitiatoren in erster Linie Oniumsalze, wie z.B. Aryliodonium-, -sulfonium- oder -diazoniumsalze, sowie (etwas weniger reaktive) Ferroceniumsalze, die mit nicht-nukleophilen Basen als Anionen gepaart sind, die den erwähnten starken Säuren entsprechen. Dafür kommen seit einigen Jahren zumeist Hexafluorophosphate, PF₆⁻, Hexafluoroantimonat, SbF₆⁻, oder verschiedene Borate, wie z.B. Tetrakis(perfluorphenyl)borat, zum Einsatz.

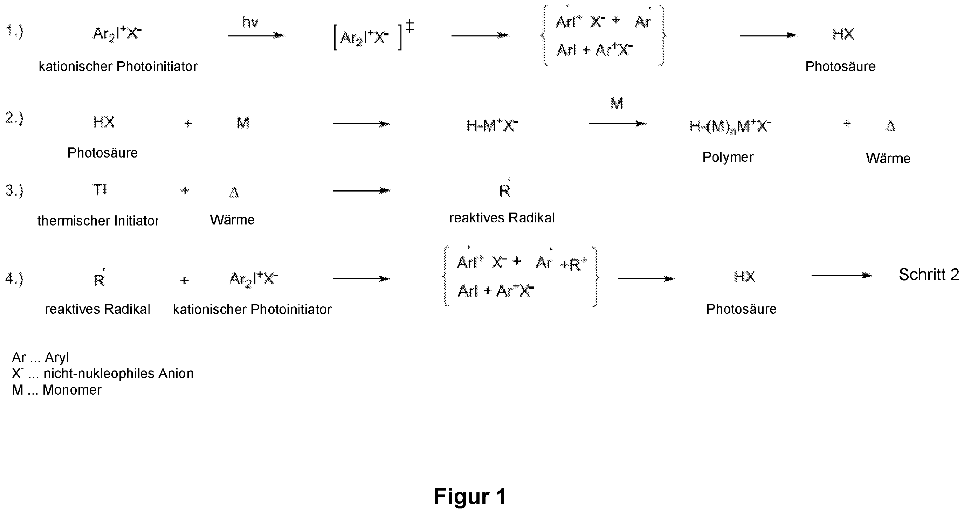

In Fig. 1 ist daher zur Veranschaulichung die Reaktionsabfolge der radikalisch induzierten kationischen Photopolymerisation am Beispiel eines Diaryliodoniumsalzes dargestellt.

Als thermisch-radikalische Initiatoren oder "Aktivatoren" wurden in den RICP-Verfahren in Kombination mit den kationischen Photoinitiatoren gängige thermolabile Radikalbildner eingesetzt, wie etwa Azoverbindungen, z.B. Azobis(isobutyronitril) (AIBN), Peroxide, z.B. (Di-)Benzoylperoxid (BPO), usw.

Im bisher einzigen bekannten als Frontalpolymerisation durchgeführten RICP-Verfahren gemäß Mariani et al. (s.o.) wurde Diaryliodoniumhexafluoroantimonat als kationischer Photoinitiator in Kombination mit Benzoylperoxid (BPO) als thermischem Initiator eingesetzt. Als kationisch polymerisierbares Monomer diente der hochreaktive 3,4-Epoxycyclohexancarbonsäure-3',4'-epoxycyclohexylmethylester (CE) der nachstehenden Formel:

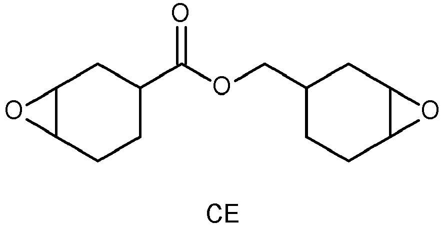

Ganz allgemein sind die für die Frontalpolymerisation verwendeten Reaktionsgemische üblicherweise frei von Lösungsmitteln, zumal die frei werdende Reaktionswärme nicht abgeführt zu werden braucht, sondern im Reaktionssystem verbraucht wird, sind daher inhärent äußerst energieeffizient und zeichnen sich durch hohe Polymerisationsgeschwindigkeiten und Reaktionsumsätze aus.

Nachteilig ist jedoch die faktische Unmöglichkeit einer Durchmischung der Reaktionsgemische während der Polymerisationsreaktion, die ja zu einer Zerstörung der Front führen würde, weswegen nicht selten Inhomogenitäten des Polymerisats auftreten, wie z.B. durch Blasenbildung aufgrund von lokaler Überhitzung oder Gaseinschlüssen.

Für Letztere ist unter anderem der thermische Initiator verantwortlich, während dessen thermischer Zersetzung es in der Regel zur Entstehung von gasförmigen Nebenprodukten wie etwa CO₂ (bei BPO) bzw. N₂ (bei AIBN) kommt. Die mitunter hohen Temperaturen von über 100 °C, nicht selten sogar über 150 °C, in der wandernden Front bewirken zudem - speziell wenn es aufgrund von inhomogener Verteilung des Initiators im Gemisch zu lokaler Überhitzung kommt - häufig ein Verdampfen bzw. eine thermische Zersetzung mancher Monomere, was wiederum zu Blasenbildung im Polymerisat führt, wie dies von den Erfindern des vorliegenden Anmeldungsgegenstandes auch für das von Mariani et al. (s.o.) eingesetzte CE-Monomer beobachtet wurde. Es wird davon ausgegangen dass bei dieser Temperatur die Supersäure die Esterbindung des Monomers spaltet und es sodann zu einer Decarboxylierungsreaktion unter Freisetzung von CO₂ kommt.

Dazu kommt, dass diese klassischen thermischen Initiatoren nicht in der Lage sind, mit etwas weniger reaktiven, aber dennoch weit verbreiteten Monomeren, wie z.B. dem nachstehend dargestellten Bisphenol-A-diglycidylether (BADGE) oder Oligomeren davon, Frontalpolymerisation auszulösen.

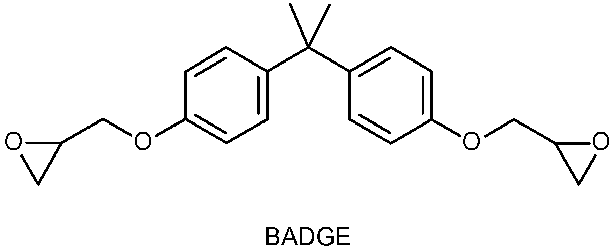

Ziel der Erfindung war vor diesem Hintergrund die Entwicklung eines Verfahrens der radikalisch induzierten kationischen Frontalpolymerisation (RICFP), in dem auch weniger reaktive Monomere polymerisiert und generell Inhomogenitäten des Polymerisats weitestgehend vermieden werden können.

### OFFENBARUNG DER ERFINDUNG

Dieses Ziel erreicht die vorliegende Erfindung durch Bereitstellung eines Verfahrens zur radikalisch induzierten kationischen Frontalpolymerisation von kationisch polymerisierbaren Monomeren mittels einer Kombination aus zumindest einem kationischen Polymerisationsinitiator und zumindest einem Aktivator für den zumindest einen Initiator, das dadurch gekennzeichnet ist, dass als Aktivator Benzpinakol eingesetzt wird, bzw. durch Bereitstellung der Verwendung von Benzpinakol als Aktivator für kationische Polymerisationsinitiatoren bei der radikalisch induzierten kationischen Frontalpolymerisation von kationisch polymerisierbaren Monomeren.

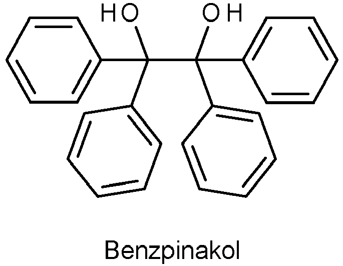

Die Erfinder haben im Rahmen ihrer Forschungsarbeiten eine Reihe von bekannten thermisch-radikalischen Initiatoren als Aktivatoren für verschiedene kationische Photoinitiatoren untersucht, darunter neben anderen C-C-labilen Verbindungen auch verschiedene Peroxide, Acylperoxide, Percarbonate, Sulfonylperoxide und Azoverbindungen, und überraschenderweise festgestellt, dass davon Benzpinakol nicht nur der einzige thermische Initiator war, der mit allen getesteten Monomeren im Wesentlichen blasenfreie Polymerisate lieferte, sondern auch als einziger Initiator bei gängigen, aber wenig reaktiven Monomeren wie BADGE überhaupt eine Frontalpolymerisation zu initiieren imstande war, wie die späteren Beispiele belegen.

Dies war aus folgenden Gründen umso überraschender:
- Einerseits haben D. Braun und K. Becker bereits in den späten 1960er-Jahren (Braun und Becker, "Aromatische Pinakole als Polymerisationsinitiatoren", Angew. Makromol. Chem. 6(1), 186-189 (1968)) Benzpinakol und mehrere in para-Stellung der Aromaten halogenierte Derivate davon als wirksame thermische Polymerisationsinitiatoren (wenn auch nur für die klassische radikalische Polymerisation olefinischer Monomere) offenbart. Und im eingangs erwähnten US-Patent 4.336.366 aus 1981 werden ebenfalls Benzpinakol-Derivate als "Co-Katalysatoren" für (allerdings thermische) kationische Initiatoren offenbart.
- Andererseits werden allerdings in diesem US-Patent ausdrücklich nur Derivate von Benzpinakol "ohne freie OH-Gruppen" als geeignet beschrieben und beansprucht, d.h. konkret an beiden Sauerstoffatomen alkylierte, acylierte oder silylierte Derivate, da diese sich bereits bei niedrigeren Temperaturen zersetzen sollen - und das, obwohl dort bei Temperaturen von 60-200 °C, vorzugsweise 100-160 °C, polymerisiert wird. Und auch Braun und Becker hatten bereits davor festgestellt, dass Benzpinakol und dessen halogenierte Derivate "erst bei relativ hohen Temperaturen zerfallen", obwohl eine "merkliche Zersetzung" bereits ab 40 °C zu beobachten sein soll (Braun und Becker; s.o.).

Entgegen der Offenbarung von US-Patent 4.336.366 haben die Erfinder somit herausgefunden, dass Benzpinakol für die speziellen Zwecke der vorliegenden Erfindung, d.h. für die Verwendung als thermisch-radikalischer Initiator in Kombination mit einem kationischen Photoinitiator bei radikalisch induzierter kationischer Frontalpolymerisation von kationisch polymerisierbaren Monomeren, hervorragend geeignet ist, da es nicht nur bei manchen Monomeren *de facto* als einziger Initiator in der Lage ist, überhaupt eine durch das Reaktionsgemisch wandernde Front auszubilden, sondern darüber hinaus auch noch im Wesentlichen blasenfreie Polymerisate liefert.

Der oder die in Kombination mit Benzpinakol eingesetzten kationische(n) Polymerisationsinitiator(en) ist/sind zwar nicht speziell eingeschränkt, vorzugsweise jedoch aus den üblichen Iodonium-, Phosphonium-, Sulfonium-, Diazonium- und Ferrocenium- oder auch aus Thiopyrylium-, Pyrylium- und Selenoniumsalzen, noch bevorzugter aus arylsubstituierten Vertretern davon, noch bevorzugter aus Salzen mit nicht-nukleophilen Basen sehr starker Säuren, wie z.B. B(C₆F₅)₄⁻, SbF₆⁻, AsF₆⁻, PF₆⁻ oder BF₄⁻, ausgewählt. Insbesondere wird hierfür gemäß vorliegender Erfindung ein Diaryliodoniumsalz eingesetzt, da diese Salze einerseits die gängigsten Vertreter kationischer Initiatoren darstellen und kostengünstig erhältlich sind und sich andererseits die Reaktivität von lodoniumsalzen durch Zusatz von Sensitizern, wie z.B. Isopropylthioxanthon oder Dibutylanthracen (vgl. J. Crivello, K. Dietliker, "Chemistry and Technology of UV and EB Formulations", 2. Aufl., Bd. III, S. 349, Wiley) in deutlich stärkerem Ausmaß erhöhen lässt als jene anderer Oniumsalze.

In besonders bevorzugten Ausführungsformen wird als kationischer Polymerisationsinitiator (4-Octyloxyphenyl)(phenyl)iodonium-hexafluoroantimonat oder (4-Isopropylphenyl)(4'-methylphenyl)iodonium-tetrakis(pentafluorphenyl)borat und noch bevorzugter Diphenyliodonium-tetrakis(perfluor-t-butyloxy)aluminat eingesetzt, mit denen ausgezeichnete Ergebnisse erzielt wurden.

Die kationische Polymerisation wird in bevorzugten Ausführungsformen als ringöffnende Polymerisation durchgeführt (vgl. J. Crivello, K. Dietliker, "Chemistry and Technology of UV and EB Formulations", 2. Aufl., Bd. III, S. 334, Wiley), wenngleich auch nicht-zyklische Monomere, wie z.B. Vinylether, eingesetzt werden können. In besonders bevorzugten Ausführungsformen werden als kationisch polymerisierbare Monomere ein- oder mehrwertige Epoxide (Oxirane), Thiirane (Episulfide), Oxetane, Lactame, Lactone, Lactid, Glykolid, Tetrahydrofuran oder Gemische davon eingesetzt, insbesondere ein oder mehrere mehrwertige Epoxide oder auch Vinylether oder Isobutylen-Derivate.

Die Frontalpolymerisationsreaktion unter erfindungsgemäßer Verwendung von Benzpinakol als thermischem Initiator kann allerdings auch in Gegenwart von Sensitizern und/oder zusätzlichen Photoinitiatoren gestartet werden, um so die Lichtausbeute zu erhöhen und den Start der Polymerisation zu beschleunigen bzw. überhaupt in Gang zu setzen, z.B. in Gegenwart von im Wellenlängenbereich des kationischen Photoinitiators (üblicherweise unter 400 nm, oft soger unter 300 nm) lichtabsorbierenden Füllstoffen. Außerdem kann die Reaktionskaskade des Paares aus kationischem und thermischem Initiator auch thermisch initiiert werden, indem durch anfängliche Zufuhr von Wärmeenergie zunächst das Benzpinakol in Radikale zerfällt, die in der Folge die Zersetzung des kationischen Initiators auslösen, wonach die Kaskade wieder in der oben beschriebenen Weise abläuft.

Auch solche Ausführungsformen der Erfindung werden in der Folge anhand von Beispielen dokumentiert.

Darüber hinaus kann in bevorzugten Ausführungsformen der Erfindung nicht nur, wie zuvor erwähnt, ein Gemisch verschiedener kationisch polymerisierbarer Monomere, z.B. Epoxide, eingesetzt werden, sondern auch ein Monomerengemisch aus kationisch und radikalisch polymerisierbaren Monomeren, um so ein "Hybridmaterial" aus kationischen und radikalischen Polymerisaten zu erhalten. Dabei kann das Benzpinakol als thermisch-radikalischer Initiator sowohl die Zersetzung des kationischen Photoinitiators als auch die radikalische Polymerisation der entsprechenden Monomere auslösen, und/oder es wird ein zusätzlicher radikalischer (thermischer oder Photo-) Initiator zugesetzt.

Weiters können gemäß vorliegender Erfindung neben den oben erwähnten auch weitere Komponenten, die beispielsweise aus üblichen Stabilisatoren, Modifikatoren, Reglern, Lösungsmitteln, Farbstoffen, Pigmenten und Gemischen davon ausgewählt sein können, eingesetzt werden, solange sie die Frontalpolymerisation nicht behindern oder gar unterbinden.

### KURZBESCHREIBUNG DER ZEICHNUNG

Fig. 1 zeigt, wie erwähnt, die Reaktionskaskade bei radikalisch induzierter kationischer Photopolymerisation, wie durch das "hv" in der ersten Reaktion angedeutet wird.

Alternativ dazu kann die Kaskade aber auch durch Wärmeenergie ausgelöst werden, in welchem Fall zunächst der thermische Initiator gespalten wird und seinerseits den kationischen Initiator aktiviert. Dabei entfällt gleichsam Reaktion 1, und die Kaskade wird durch wiederholte Abfolge der Reaktionen 3 - 4 - 2 wiedergegeben. Bei Einsatz eines Sensitizer absorbiert dieser das oft längerwellige Licht und überträgt die Energie auf den kationischen Initiator der dann analog zu Reaktion 1 zerfällt und die weitere Kaskade auslöst. Bei Einsatz eines radikalischen Photoinitiators, der oft auch zur Absorption bei höheren Wellenlängen als gängige kationische Initiatoren in der Lage ist, wird durch Spaltung des radikalischen Initiators ein Radikal generiert, das analog zu Reaktion 4 den kationischen Initiator zersetzt, der seinerseits wieder die Reaktionskaskade nach obigen Schema, startend mit Reaktion 2 auslösen kann. Erfindungsgemäße Beispiele dafür folgen nachstehend.

### BEISPIELE

Die vorliegende Erfindung wird durch die folgenden Beispiele konkret beschrieben, die allerdings nur zur Illustration der Ausführbarkeit der Erfindung angeführt werden und nicht als Einschränkung zu verstehen sind.

Benzpinakol, im Folgenden auch Tetraphenylethylendiol genannt und mit TPED abgekürzt, wurde genau wie die übrigen Initiatoren (mit Ausnahme von Benzpinakolbis(trimethylsilylether)) und Monomere im Handel bezogen und ohne weitere Reinigung in den Reaktionen eingesetzt.

Um nach ersten erfolgreichen Versuchen mit Benzpinakol zu untersuchen, ob dessen freie OH-Gruppe entscheidend für die Reaktivität ist, wurde der ebenfalls im US-Patent 4.336.366 offenbarte Benzpinakol-bis(trimethylsilylether) synthetisiert und seine Reaktivität bei der Frontalpolymerisation getestet. Mehrere Versuche, dort ebenfalls erwähnte alkylierte und acylierte Derivate (Benzpinakoldimethylether, Benzpinakoldiacetat) nach den wenigen bekannten Synthesewegen herzustellen, scheiterten jedoch aus bisher unbekannten Gründen.

### Synthesebeispiel 1

### Herstellung von Benzpinakol-bis(trimethylsilylether) (TPED-Si)

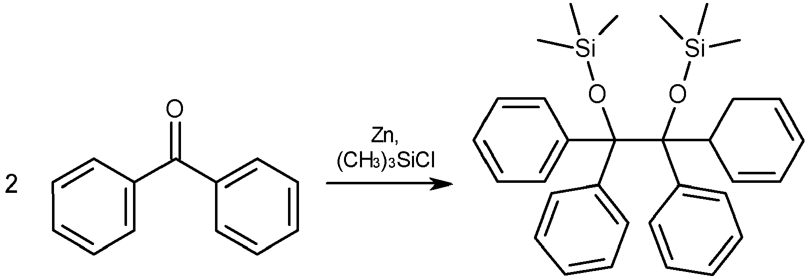

In einem Dreihalskolben mit mechanischem Rührer, Tropftrichter und Septum wurden 50 mmol Zink in 10 ml Dioxan vorgelegt, und 10 mmol Trimethylchlorsilan wurden über das Septum zugesetzt. 10 mmol Benzophenon wurden in 10 ml Dioxan gelöst und langsam zum Reaktionsgemisch zugetropft. Der Reaktionskolben wurde in einem Ultraschallbad platziert und unter Rühren 3 h lang im Ultraschallbad beschallt. Anschließend wurde das Reaktionsgemisch filtriert und mit n-Hexan versetzt, wobei ein weißer Niederschlag ausfiel. Das Gemisch wurde am Rotationsverdampfer eingeengt und anschließend mit Petrolether versetzt, bis der gebildete Niederschlag wieder teilweise in Lösung ging. Der Niederschlag wurde abfiltriert und das Filtrat am Rotationsverdampfer bis zur Trockene eingedampft, wobei 0,63 g eines weißen Feststoffs erhalten wurden, der mit PE:DCM als Laufmittel durch Kieselgel filtriert wurde.

Die Charakterisierung mittels ATR-IR, ¹³C- sowie ¹H-NMR bestätigte das Vorliegen der Titelverbindung.

### Beispiele 1 bis 5 und Vergleichsbeispiele 1 bis 8

### Frontalpolymerisation unter Verwendung unterschiedlicher Initiatoren

Als repräsentatives Monomer wurde eines der derzeit gängigsten Epoxid-Monomere, nämlich das bereits erwähnte BADGE eingesetzt, das mittels unterschiedlicher Paare aus kationischem Photoinitiator und thermischem Aktivator zu polymerisieren versucht wurde.

Die Initiatoren wurden in den in nachstehender Tabelle 1 angegebenen Mengen in 3 ml Dichlormethan gelöst. Die jeweilige klare Lösung wurde danach mit 15 g BADGE-Monomer vermischt und bei 50 °C im Ölbad gerührt. Das Dichlormethan wurde anschließend im Vakuum entfernt und die Formulierung gleichzeitig entgast. Nach 3 h wurden je 3,7 g der Proben in eine Polymerisationsform aus Polytetrafluorethylen übergeführt, die an der Seite zylindrische Aussparungen aufwies, die mit Thermofühlern bestückt waren, um die Fronttemperatur während der Polymerisation zu bestimmen, deren Maximalwert (T_{F,max}) zu Vergleichen herangezogen wird.

Die Bestrahlung der Formulierung erfolgte senkrecht an einem Ende der Polymerisationsform über einen Lichtwellenleiter, der mit einer Omnicure 2000 Quecksilberdampflampe mit einem Wellenlängenfilter von 320-500 nm gekoppelt war. Die Intensität des UV-Lichts wurde auf 3 W/cm² am Ausgang des Wellenleiters eingestellt. Der Verlauf der Polymerisation wurde mit einer handelsüblichen Digitalkamera aufgenommen und im Anschluss an die Reaktion ausgewertet. Zur Bestimmung der Frontgeschwindigkeit (V_{F}) erfolgte mittels eines seitlich an der Polymerisationsform angebrachten Lineals.

Die beiden getesteten kationischen Photoinitiatoren waren (4-Octyloxyphenyl)(phenyl)iodonium-hexafluoroantimonat (IOC-8) und (4-Isopropylphenyl)(4'-methylphenyl)-iodonium-tetrakis(pentafluorphenyl)borat (PFPB).

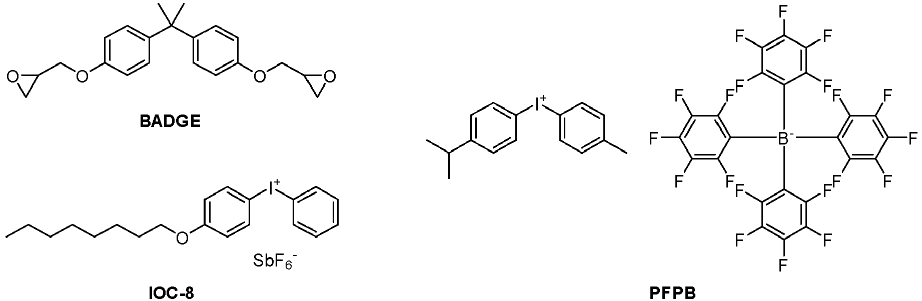

Als Aktivatoren, d.h. thermische Initiatoren, wurden insgesamt neun unterschiedliche Verbindungen untersucht. Dabei wurden neben Benzpinakol (TPED) und dessen Disilylether (TPED-Si) mit dem Dinitril TPE-CN, Tetrafluorethan (TPE-H) sowie Triphenylacetophenon (TPAP) noch drei weitere C-C-labile thermisch-radikalische Initiatoren getestet, die keine gasförmigen Nebenprodukte bilden:

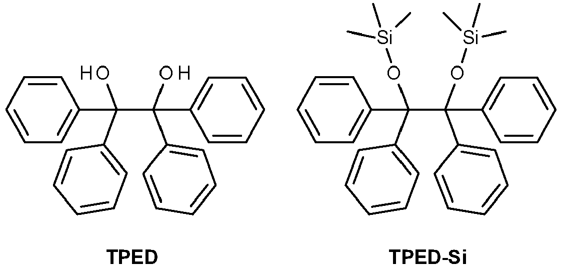

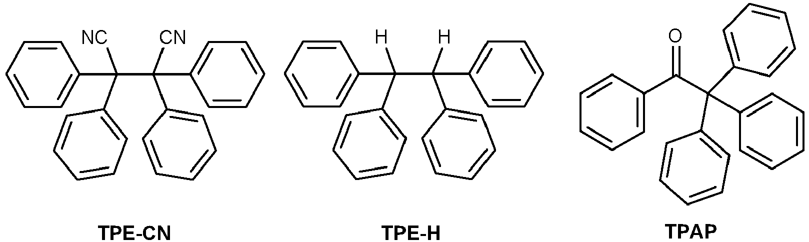

Zusätzlich wurden mit tert-Butylperoxid (TBPO), tert-Butylcyclohexylperoxodicarbonat (TBC-PDC) und Benzoylperoxid (BPO) drei klassische thermische Peroxidinitiatoren sowie Azo-bis(isobutyronitril) (AIBN) untersucht:

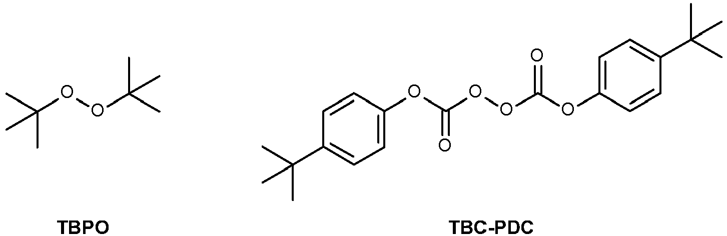

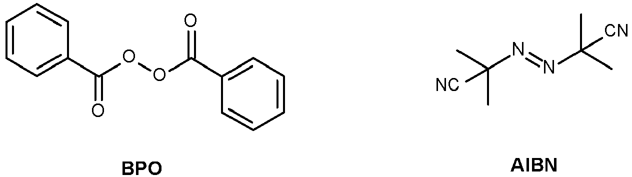

Weiters wurde Dimethylsulfonylperoxid (DMSP) als weiterer thermischer Initiator getestet, der jedoch im Gegensatz zu den vier obigen Vertretern keine Gasentwicklung verursacht.

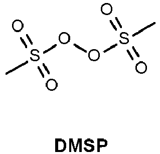

Zunächst wurden in einer ersten Versuchsreihe die verschiedenen thermischen Initiatoren in einer molaren Konzentration von durchwegs 2 Mol-% mit jeweils der gleichen molaren Menge an kationischem Initiator (IOC-8) untersucht.

In einer zweiten Versuchsreihe wurde Benzpinakol (TPED) unter Variation seiner Konzentration sowie des kationischen Initiators getestet.

In der umseitigen Tabelle 1 sind die Ergebnisse dieser beiden Versuchsreihen für erfindungsgemäße Beispiele (B1 bis B5) und Vergleichsbeispiele (V1 bis V8) angeführt.

**Tabelle 1: Frontalpolvmerisation von BADGE**

| **Beispiel** | **kat. Initiator** | **c(kat. Init.) [mol%]** | **therm. Initiator** | **c(therm. Init.) [mol%]** | **V_{F} [cm/min]** | **T_{F,max} [°C]** | **Front ausgebildet** |
|---|---|---|---|---|---|---|---|
| B1 | IOC-8 | 2,0 | TPED | 2,0 | 8,6 | 189 | + |
| B2 | IOC-8 | 2,0 | TPED-Si | 2,0 | 3,5 | 139 | + |
| | | | | | | | |
| V1 | IOC-8 | 2,0 | TPE-CN | 2,0 | -^{*)} | -^{*)} | - |
| V2 | IOC-8 | 2,0 | TPE-H | 2,0 | -^{*)} | -^{*)} | - |
| V3 | IOC-8 | 2,0 | TPAP | 2,0 | -^{*)} | -^{*)} | - |
| | | | | | | | |
| V4 | IOC-8 | 2,0 | TBPO | 2,0 | -^{*)} | -^{*)} | - |
| V5 | IOC-8 | 2,0 | TBC-PDC | 2,0 | -^{*)} | -^{*)} | - |
| V6 | IOC-8 | 2,0 | BPO | 2,0 | -^{*)} | -^{*)} | - |
| V7 | IOC-8 | 2,0 | AIBN | 2,0 | -^{*)} | -^{*)} | - |
| V8 | IOC-8 | 2,0 | DMSP | 2,0 | -^{*)} | -^{*)} | - |
| | | | | | | | |
| B1 | IOC-8 | 2,0 | TPED | 2,0 | 8,6 | 189 | + |
| B3 | IOC-8 | 0,75 | TPED | 2,0 | 2,3 | 172 | + |
| B4 | IOC-8 | 2,0 | TPED | 1,0 | 5,8 | 217 | + |
| B5 | PFPB | 2,0 | TPED | 2,0 | 11,4 | 209 | + |

| | | | | | | | |
|---|---|---|---|---|---|---|---|
| *) keine Frontalpolymerisation | | | | | | | |

Aus Tabelle 1 geht klar hervor, dass von den neun getesteten thermischen Initiatoren ausschließlich Benzpinakol TPED sowie dessen Silylether TPED-Si überhaupt in der Lage waren, eine Frontalpolymerisation auszulösen.

In allen anderen Fällen, d.h. den Vergleichsbeispielen 1 bis 8, kam es zwar im Bestrahlungsbereich lokal zu Polymerisation, aber es begann keine Front durch das Reaktionsgemisch zu wandern.

Ohne sich auf eine bestimmte Theorie einschränken zu wollen, nehmen die Erfinder an, dass die Ursache für die Reaktivität des Silylethers TPED-Si eine (zumindest partielle) Hydrolyse der O-Si-Bindungen in Gegenwart der starken Photosäure war, wodurch *in situ* das reaktive Diol TPED gebildet wurde. Dafür sprechen die - bei gleicher Initiator-Konzentration - deutlich niedrigere Wanderungsgeschwindigkeit der Front, die für TPED etwa das 2,5fache jener von TPED-Si betrug (ΔV_{F}: 5,1 cm/min), sowie die deutlich niedrigere Fronttemperatur (ΔT_{F,max}: 50 °C).

Es ist davon auszugehen, dass sich strukturell ähnliche Verbindungen wie TPED-Si, d.h. solche, in denen eine oder beide der OH-Gruppen von TPED mit "Schutzgruppen" versehen sind, die unter den bei der Frontalpolymerisation in Gegenwart von Photosäuren herrschenden, stark sauren Bedingungen leicht abspaltbar sind, um so das freie Diol TPED auszubilden. Als Beispiele für Ether als Schutzgruppe kommen neben anderen Silylethern etwa wie t-Butyldimethylsilylether, oder t-Butyldiphenylsilylether beispielsweise auch tert-Butylether, Methoxymethylether, Allylether, Benzylether oder Tetrahydropyranylether in Frage. Zusätzlich sind unter den Reaktionsbedingungen während der Frontalpolymerisation auch 1,2-Acetalgruppen auf Basis von Aceton oder Benzaldehyd sowie Acetylester oder Pivaloylester leicht spaltbar.

Derartige geschützte Formen von TPED, die während der Frontalpolymerisation Benzpinakol freisetzen, sollen daher ebenfalls im Schutzumfang der vorliegenden Erfindung liegen.

Aus Tabelle 1 geht klar hervor, dass von den neun getesteten thermischen Initiatoren ausschließlich Benzpinakol TPED sowie dessen Silylether TPED-Si überhaupt in der Lage waren, eine Frontalpolymerisation auszulösen.

In allen anderen Fällen, d.h. den Vergleichsbeispielen 1 bis 8, kam es zwar im Bestrahlungsbereich lokal zu Polymerisation, aber es begann keine Front durch das Reaktionsgemisch zu wandern.

Ohne sich auf eine bestimmte Theorie einschränken zu wollen, nehmen die Erfinder an, dass die Ursache für die Reaktivität des Silylethers TPED-Si eine (zumindest partielle) Hydrolyse der O-Si-Bindungen in Gegenwart der starken Photosäure war, wodurch *in situ* das reaktive Diol TPED gebildet wurde. Dafür sprechen die - bei gleicher Initiator-Konzentration - deutlich niedrigere Wanderungsgeschwindigkeit der Front, die für TPED etwa das 2,5fache jener von TPED-Si betrug (ΔV_{F}: 5,1 cm/min), sowie die deutlich niedrigere Fronttemperatur (ΔT_{F,max}: 50 °C).

Es ist davon auszugehen, dass sich strukturell ähnliche Verbindungen wie TPED-Si, d.h. solche, in denen eine oder beide der OH-Gruppen von TPED mit "Schutzgruppen" versehen sind, die unter den bei der Frontalpolymerisation in Gegenwart von Photosäuren herrschenden, stark sauren Bedingungen leicht abspaltbar sind, um so das freie Diol TPED auszubilden. Als Beispiele für Ether als Schutzgruppe kommen neben anderen Silylethern etwa wie t-Butyldimethylsilylether, oder t-Butyldiphenylsilylether beispielsweise auch tert-Butylether, Methoxymethylether, Allylether, Benzylether oder Tetrahydropyranylether in Frage. Zusätzlich sind unter den Reaktionsbedingungen während der Frontalpolymerisation auch 1,2-Acetalgruppen auf Basis von Aceton oder Benzaldehyd sowie Acetylester oder Pivaloylester leicht spaltbar.

**Tabelle 2: Variation der kationisch polymerisierbaren Monomere**

| Beispiel | Monomer | c(IOC-8) [mol%] | c(TPED) [mol%] | V_{F} [cm/min] | T_{F,max} [°C] | Front ausgebildet |
|---|---|---|---|---|---|---|
| B6 | CE | 1,0 | 1,0 | 26,2 | 176 | + |
| B7 | CE | 1,0 | 2,0 | 23,2 | 169 | + |
| B8 | CE | 1,0 | 3,0 | 27,5 | 166 | + |
| B9 | Epikote 827 | 1,0 | 1,0 | 2,6 | 182 | + |
| B10 | CHDGE | 2,0 | 2,0 | 37,9 | 140 | + |
| B11 | HDDGE | 1,0 | 1,0 | 28,6 | 181 | + |
| B12 | NPDGE | 1,0 | 1,0 | 19,9 | 169 | + |
| B13 | BADGE | 1,0 | 1,0 | 4,9 | 184 | + |

Die Struktur der dazu eingesetzten Monomere ist umseitig angegeben.

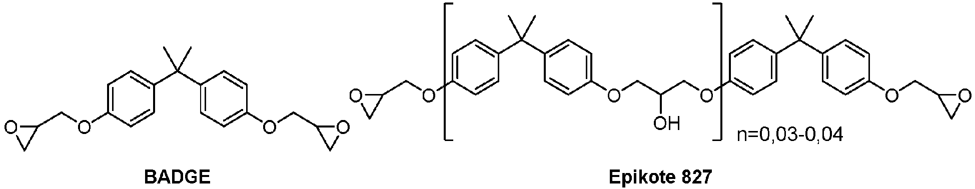

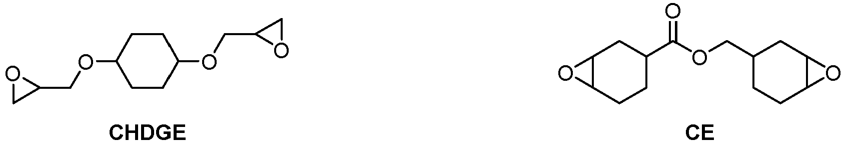

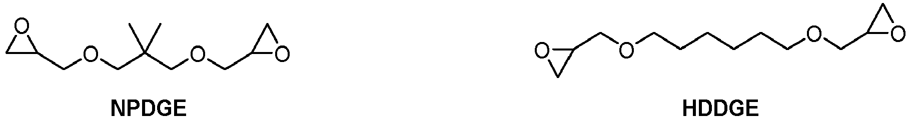

Wie aus Tabelle 3 ersichtlich, kann neben dem derzeit gebräuchlichsten Harz BADGE auch eine Vielzahl anderer kationisch polymerisierbarer Harze nach dem erfindungsgemäßen Verfahren durch radikalisch induzierte kationische Frontalpolymerisation ausgehärtet werden. Auch eine Variation der Initiatorkonzentration ist problemlos möglich, ohne die Fronteigenschaften signifikant zu verändern (siehe vor allem die Beispiele 6 bis 8).

Ebenfalls zu erkennen ist die gegenüber den Bisphenol-A-basierten Epoxidharzformulierungen der Beispiele 9 und 13 noch deutlich gesteigerte Reaktivität des Initiatorsystems bei Verwendung für cycloaliphatische oder aliphatische Epoxidharze in den übrigen Beispielen dieser Gruppe.

### Beispiele 14 bis 19

### Reaktionsgemische mit Füllstoff

Durch den Einsatz von Füllstoffen wie etwa Silikaten können neue Kompositwerkstoffe hergestellt werden. Im Bereich der Stromerzeugung werden beispielsweise um Kupferstäbe gewickelte Glimmerfolien als elektrisches Isolationsmaterial verwendet. Die Stabilisierung dieser Folien erfolgt herkömmlicherweise mittels Epoxidharzsystemen durch Vakuumimprägnierung.

In dieser Beispielsgruppe wurden daher die Frontalpolymerisation von mit Glimmerpulver gefüllten Epoxidharzformulierungen zweier verschiedener Monomere unter Verwendung des Initiatorpaares IOC-8/TPED untersucht.

Da Glimmer im Wellenlängenbereich des kationischen Photoinitiators, IOC-8, absorbiert, ist die in den obigen Beispielen angewandte Initiierung der Reaktionskaskade durch Zersetzung des IOC-8 mittels Bestrahlung nicht möglich. Daher kamen drei unterschiedliche alternative Mechanismen zur Anwendung.

### a) Initiierung mittels thermischer Energie

Durch lokales Erhitzen des Reaktionsgemischs (z.B. mit einem Lötkolben oder Heißluftföhn) wurde in diesem Fall zunächst der thermische Initiator TPED in Radikale gespalten, die wiederum die Zersetzung des kationischen Initiators bewirken, wonach die übliche Kaskade abläuft (Beispiele 14-16).

### b) Photochemische Initiierung mittels eines Sensitizers

Die Kaskade wurde durch Zusatz eines Photosensibilisators ("Sensitizers") mit einem Absorptionsmaximum bei anderen (üblicherweise höheren) Wellenlängen als der kationische Photoinitiator sowie Glimmer (im Idealfall genau beim Emissionsmaximum der Lampe) und Übertragung der von diesem aufgenommenen Lichtenergie auf den Photoinitiator zur Aktivierung desselben ausgelöst. Als exemplarischer Sensitizer wurde Perylen eingesetzt (Beispiele 18-19).

### c) Photochemische Initiierung mittels eines zusätzlichen Photoinitiators

In diesem Fall wurde die Kaskade unter Verwendung eines zusätzlichen Photoinitiators ausgelöst, der ebenfalls in einem anderen (zumeist höheren)Bereich als IOC-8 und Glimmer absorbiert und Radikale bildet, die den kationischen Initiator aktivieren. Hierfür wurde der von Ivoclar Vivadent im Handel erhältliche Germanium-Initiator Ivocerin® eingesetzt (Beispiel 17).

In der umseitigen Tabelle 3 sind die Formulierungen und Ergebnisse dieser Beispiele angeführt.

**Tabelle 3: Gefüllte Formulierungen**

| Beispiel | Monomer | c(IOC-8) [mol%] | c(TPED) [mol%] | c(Perylen) [mol%] | c(Ivocerin) [mol%] | c(Glimmer) [%] | V_{F} [cm/min] | T_{F,max} [°C] | Front ausgebildet |
|---|---|---|---|---|---|---|---|---|---|
| B14 | BADGE | 1,0 | 8,0 | | | 15 | 3,7 | 183 | + |
| B15 | BADGE | 1,0 | 8,0 | | | 10 | 3,8 | 176 | + |
| B16 | BADGE | 1,0 | 8,0 | | | 5 | 4,0 | 187 | + |
| B17 | BADGE | 1,0 | 8,0 | | 2,0 | 5 | 3,1 | 157 | + |
| B18 | BADGE | 2,0 | 2,0 | 0,5 | | 10 | 8,1 | 190 | + |
| B19 | CHDGE | 2,0 | 2,0 | 0,2 | | 10 | 16,9 | 126 | + |

Wie aus Tabelle 3 ersichtlich, wurde in allen Fällen eine stabile, durch das Reaktionsgemisch wandernde Front ausgebildet.

In weiteren (hierin nicht im Detail beschriebenen) Experimenten mit Photosensibilisator haben sich auch Anthracen und 3-ITX (3-Isopropyl-9H-thioxanthen-9-on) als Sensitizer für IOC-8 in Gegenwart von TPED als thermischem Initiator bewährt, während sich bei Verwendung von Kombinationen aus IOC-8 und verschiedenen thermischen Initiatoren (TBPO, TBC-PDC, BPO, AIBN und DMSP) als Initiatorpaare erneut keine Front ausbilden konnte.

### Beispiele 20 bis 24, Vergleichsbeispiel 9

### Physikalische Eigenschaften von Formulierungen und daraus gebildeten Produkten

Die Eigenschaften von mittels radikalinduzierter kationischer Frontalpolymerisation (RICFP) hergestellten Polymeren sind ähnlich und übertreffen teilweise sogar jene von mittels herkömmlicher thermischer Aushärtung hergestellten Polymeren. Das soll in den folgenden Beispielen veranschaulicht werden, in denen die Lagerstabilität, thermomechanischen, mechanischen und elektrischen Eigenschaften von mittels RICFP hergestellten BADGE-Polymeren wurden mit BADGE-Polymeren verglichen werden, die mittels Anhydridhärtung unter Verwendung von Methylhexahydrophthalsäureanhydrid hergestellt wurden. Als Photosäurebildner (PAG) wurde dabei stets IOC-8-SbF₆ eingesetzt und als radikalisch-thermischer Initiator (RTI) Benzpinakol (TPED). Die genauen Zusammensetzungen der Formulierungen sind in den jeweiligen Beispielen angeführt.

### Beispiele 20 und 21, Vergleichsbeispiel 9 - Lagerstabilität

Die Lagerstabilität von Formulierungen ist ein entscheidender Parameter für die Reproduzierbarkeit der damit durchgeführten Polymerisationsreaktionen. Zur Untersuchung desselben wurden Gemische aus Bisphenol-A-diglycidylether zusammen mit dem radikalisch-thermischen Initiator und dem Photosäurebildner in zwei verschiedenen Konzentrationen hergestellt. Auf der Basis vorbereitender Experimente wurden Konzentrationen von jeweils 1 bzw. 2 Mol-% von Initiator und Photosäurebildner gewählt. Als Vergleichsbeispiel wurde zudem ein im Handel erhältliches System aus BADGE und einem Härter auf Anhydridbasis, Methylhexahydrophthalsäureanhydrid (MHHPA), zusammen mit einem organischen Zn-Salz als Beschleuniger getestet (siehe das technische Datenblatt für Araldite Impregnating Resin System MY 790-1, CH / HY 1102; 2008). Da BADGE-Formulierungen während der Lagerung bei Temperaturen unter 50 °C zur Kristallisation neigen, wurden alle Formulierungen bei 50 °C und unter Lichtausschluss gelagert, um unerwünschte Aktivierung des Photoinitiators zu vermeiden.

Um einen Einblick in die Lagerstabilität der Formulierungen im Hinblick auf vorzeitige Gelierung zu erhalten, wurden deren Viskosität direkt nach dem Vermischen und danach in bestimmten Zeitabständen mittels Rheometrie gemessen. Diese Viskositätsmessungen wurden auf einem Anton Paar MCR 300-Rheometer mit Peltierofen und einem CP-50-Messsystem durchgeführt. Die Messungen erfolgten in Rotation mit einer Scherrate von 100 _{S}⁻¹ für eine Dauer von 100 s bei einer konstanten Temperatur von 50 °C (zur Verhinderung von scherungsinduzierter Kristallisation bei Temperatur in der Nähe der Schmelzpunkts). Für die Analyse wurde der letzte Viskositätswert dieser 100-Sekunden-Zeitspanne herangezogen. Alle Messungen wurden dreifach durchgeführt und die Ergebnisse gemittelt.

**Tabelle 4 - dynamische Viskosität in Abhängigkeit von der Lagerzeit**

| | **FORMULIERUNGEN** | | |
|---|---|---|---|
| | **IOC/TPED je 1 Mol-%** | **IOC/TPED je 2 Mol-%** | **MHHPA + Zn-Beschleuniger** |
| **Tag** | **[Pa.s]** | **[Pa.s]** | **[Pa.s]** |
| 0 | 0,327 | 0,374 | 0,072 |
| 1 | 0,364 | 0,415 | 0,088 |
| 2 | 0,371 | 0,512 | 0,276 |
| 3 | 0,372 | 0,623 | 1,117 |
| 4 | 0,393 | 0,662 | 5,005 |
| 7 | 0,439 | 0,772 | -¹⁾ |
| 11 | 0,489 | 1,120 | -¹⁾ |
| 18 | 0,527 | 1,387 | -¹⁾ |
| 28 | 0,575 | 1,770 | -¹⁾ |

| | | | |
|---|---|---|---|
| ¹⁾ Probe nicht messbar, da geliert. | | | |

Die Formulierung mit jeweils 1 Mol-% IOC und TPED ist bei 50 °C unter Lichtausschluss über 4 Wochen äußerst stabil. Bei Erhöhung der Konzentrationen auf jeweils 2 Mol-% nimmt die Viskosität nach etwa 1 Woche zwar leicht zu, die Formulierung ist aber dennoch für die Verarbeitung geeignet. Im Vergleichsbeispiel mit Anhydrid zeigt sich hingegen bereits nach 3 Tagen eine enorme Zunahme der Viskosität, und nach nur 5 Tagen wurde die Formulierung inhomogen, so dass keine Viskositätsbestimmung mehr möglich war. Formulierungen mit Benzpinakol als Aktivator weisen demnach sehr gute Lagerbeständigkeit auf.

### Beispiele 22 bis 24 - thermomechanische Eigenschaften

Als aussagekräftiger Parameter wurde die Glasübergangstemperatur T_{g} herangezogen, die mittels DSC bestimmt wurde. Dazu wurden Proben aus dem zentralen Abschnitt von mittels RICFP gehärteten Polymerstäben genommen und in einer Retsch Kryomühle gemahlen, um feine Polymerpulver zu erhalten. Diese wurden in Aluminiumtiegel genau eingewogen, und die DSC-Signale wurden auf einem Netsch STA 449 F1 in zwei Zyklen von 25 °C bis 250 °C mit einer Heizrate von 30 K/min, 5 min Haltezeit bei 250 °C und Abkühlung auf 25 °C mit 20 K/min aufgenommen. Die T_{g} wurde im zweiten Zyklus bestimmt. Alle Messungen wurden dreifach durchgeführt und die Ergebnisse gemittelt.

**Tabelle 5 - Glasübergangstemperatur, T_{g}**

| c(PAG) [Mol-%] | c(RTI) [Mol-%] | T_{g} [°C] |
|---|---|---|
| 1 | 1 | 168 ± 2 |
| 2 | 1 | 160 ± 3 |
| 2 | 2 | 156 ± 4 |

Die T_{g} des Anhydrid-gehärteten BADGE-Systems wurde mit 154 ± 4 °C angegeben. Man erkennt aus Tabelle 5, dass RICFP-gehärtete Systeme durchwegs zwischen 5 und 10 °C über dem herkömmlichen Material liegen, was ihnen verbesserte Stabilität bei höheren Temperaturen verleiht. Der Umstand, dass die T_{g} mit zunehmender Initiatorkonzentration sowohl des kationischen als auch des thermischen Initiators abnimmt, kann auf die kürzere kinetische Kettenlängen zurückzuführen sein: Bei höheren Initiatorkonzentrationen werden gleichzeitig mehr Ketten gestartet, was insgesamt zu geringeren Kettenlängen führt.

### Beispiele 25 bis 37, Vergleichsbeispiele 10 bis 21

### Konzentrationsvergleiche

Diphenyliodonium-tetrakis(perfluor-t-butyloxy)aluminat, DPI-TTA, stellt einen erfindungsgemäß besonders bevorzugten Aluminium-basierten kationischen Initiator dar:

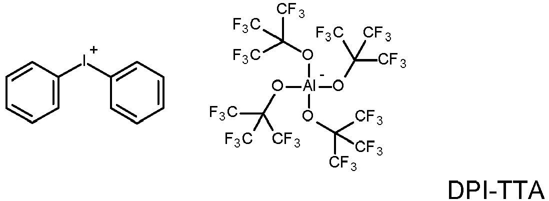

Dieser wurde im Vergleich zu dem bisher verwendeten, kommerziell erhältlichen Hexafluoroantimonat-basierten IOC-8 SbF₆ und dem ebenfalls kommerziell erhältlichen, aber deutlich teureren Tetraarylborat-basierten DAI-PFPB getestet. 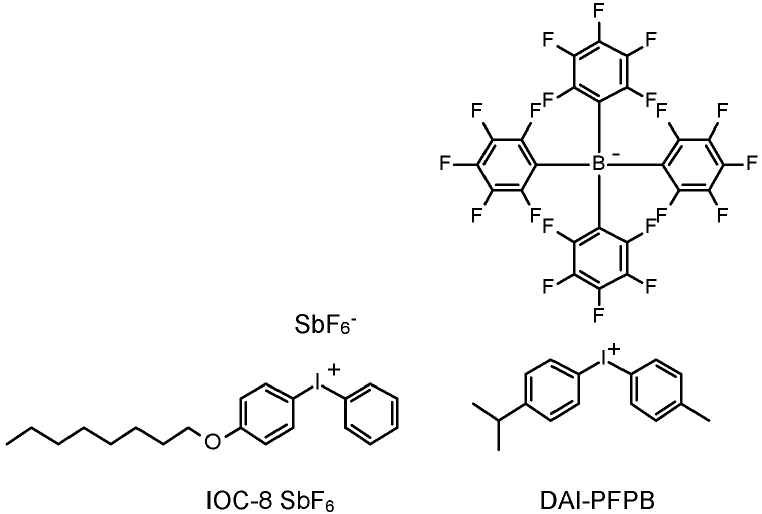 Dazu wurden Formulierungen mit jeweils 1 Mol-% des radikalisch-thermischen Initiators (RTI) Benzpinakol (TPED) und unterschiedlichen Konzentrationen der drei kationischen Initiatoren in BADGE als Epoxidharz hergestellt. Anschließend wurde versucht, diese Formulierungen mittels Frontalpolymerisation auszuhärten. Bei erfolgreichen Frontalpolymerisationsreaktionen wurden die Frontparameter ermittelt. Die Ergebnisse dieser Studie sind in Tabelle 6 angegeben. Darin steht v_{F} für die Frontgeschwindigkeit, d.h. die Geschwindigkeit mit der sich die lokale Polymerisationszone ausbreitet, und T_{F,max} steht für die maximale Temperatur der Front. "- ¹⁾" bedeutet, dass mit dieser Formulierung keine Frontalpolymerisation erreicht werden konnte.

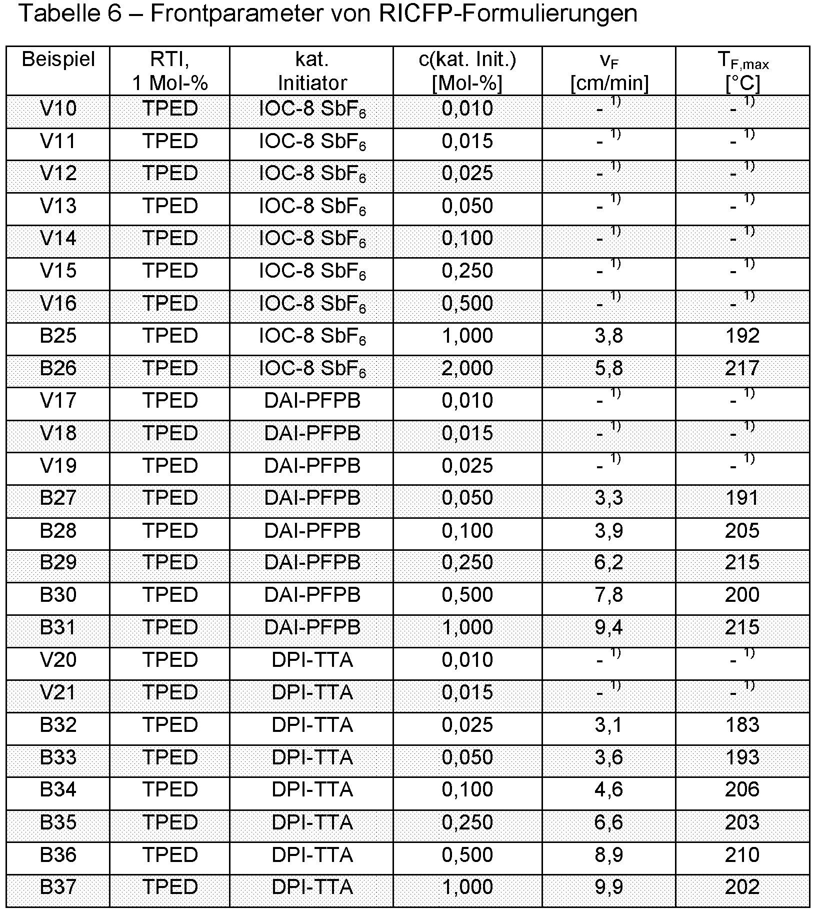

Wie Tabelle 6 zu entnehmen ist, kann bereits mit dem Tetraarylborat-basierten DAI-PFPB eine deutliche Verringerung der Konzentration des kationischen Initiators erreicht werden. Bei IOC-8 SbF₆ ist bereits bei einer Konzentration von 0,5 Mol-% keine stabile Frontalpolymerisation mit BADGE erreichbar. Im Falle des neuen Aluminium-basierten DPI-TTA ist sogar noch eine weitere Reduktion der Konzentration auf 0,025 Mol-% unter Beibehaltung der Fähigkeit zur Frontalpolymerisation möglich. Weiters ist aus der Tabelle ersichtlich, dass im Vergleich zum hexafluoroantimonat basierten IOC-8 SbF₆ mit DPI-TTA als kationischem Initiator die Frontgeschwindigkeit deutlich gesteigert werden kann.

### Beispiele 38 bis 44, Vergleichsbeispiel 22

### Frontalpolymerisation in dünnen Schichten

Frontalpolymerisation basiert auf Ausnutzung der freigesetzten Polymerisationswärme zur Spaltung von thermischen Initiatoren, die die Front aufrechterhalten. Frontalpolymerisationen sind daher stark abhängig vor der freigesetzten Energiemenge. Diese wiederum hängt von der Masse der Formulierung, dem Gehalt an reaktiven Gruppen und der Wärmekapazität der angrenzenden Materialien ab. Daher ist eine Frontalpolymerisation stets in ihrer Schichtdicke begrenzt, weil das Volumen und damit die Masse als die Oberfläche und daher die Wärmeverluste mit abnehmender Schichtdicke immer gravierender werden. Um die minimal mögliche Schichtdicke dieses Systems zu ermitteln wurde ein Setup entwickelt, das nachstehend näher erklärt wird.

### Methode und Versuchsaufbau

Die fertige Formulierung wurde jeweils in eine Polymerisationsform eingebracht, die zu Beginn eine Höhe von 5 mm aufweist. Die Höhe der Form nimmt über eine Strecke von 9,7 cm konstant ab. Damit es zu keiner Deformation des Polymers kommt, wurde auf die Polymerisationsstrecke ein Deckel aus PTFE geschraubt. Die Formulierungen wurden so lange bestrahlt, bis in einem kleinen Sichtspalt die Front zu erkennen war. Nach dem Abkühlen des Polymers wurde dieses entformt und vermessen. Die Dicke am dünnsten Ende des Polymers wurden mit einem Messschieber ermittelt, und die Werte aus jeweils drei Polymerisationsversuchen wurden gemittelt.

Für einen Vergleich der kationischen Initiatoren IOC-8 SbF₆ und DPI-TTA wurden Formulierungen mit 0,1 und 1 Mol-% eines der kationischen Intitiatoren sowie 1 oder 8 Mol-% des thermischen Initiators TPED in BADGE-Harz eingesetzt. Die Ergebnisse dieser Studie sind in Tabelle 7 angegeben.

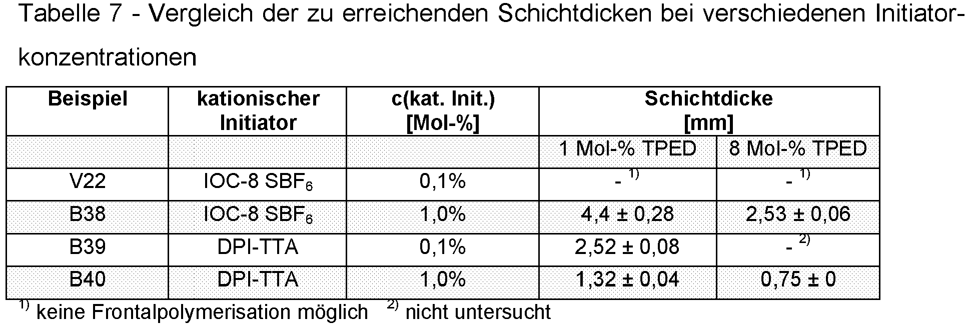

Aus Tabelle 7 ist deutlich zu erkennen, dass die zu erreichenden Schichtdicken bei DPI-TTA signifkant geringer sind als bei Verwendung von IOC-8 SbF₆. So ist im Falle von IOC-8 SbF₆ bei einer Konzentration von 0,1 Mol-% überhaupt keine Frontalpolymerisation erreicht worden, bei einer Konzentration von 1 Mol-% allerdings schon. Bei Erhöhung der Konzentration des thermischen Initiators TPED von 1 auf 8 Mol-% konnte die Schichtdicke um knapp 50 % gesenkt werden, erreichte aber noch immer nicht die gleiche Dicke, die mit DPI-TTA mit nur einem Zehntel der Konzentration des kationischen und einem Achtel der Konzentration des thermischen Initiators erreicht werden konnte.

Aufgrund der herausragend guten Ergebnisse von DPI-TTA als kationischer Initiator für die Frontalpolymerisation in dünnen Schichten wurde eine detailierte Studie mit dem Ziel, die Einflüsse der Konzentration von thermischem und kationischem Intiator auf die minimale Schichtdicke zu untersuchen, durchgeführt. Hierzu wurden die Konzentrationen von DPI-TTA und TPED weiter variiert.

**Tabelle 8 - Variation der Initiatorkonzentrationen**

| Beispiel | c(DPI-TTA) [Mol-%] | Schichtdicke [mm] | | | |
|---|---|---|---|---|---|
| | | c(TPED) | | | |
| | | 1 Mol-% | 2 Mol-% | 4 Mol-% | 8 Mol-% |
| B41 | 0,10 | 2,52 | 2,05 | 1,65 | - ¹⁾ |
| B42 | 0,25 | 1,79 | 1,50 | 1,12 | - ¹⁾ |
| B43 | 0,50 | 1,38 | 1,25 | 0,93 | - ¹⁾ |
| B44 | 1,00 | 1,32 | 1,10 | 0,83 | 0,75 |

| | | | | | |
|---|---|---|---|---|---|
| ¹⁾ nicht bestimmt | | | | | |

Wie Tabelle 8 zu entnehmen ist, sinkt die minimale Schichtdicke sowohl mit steigender Konzentration an thermischem Initiator (TPED) als auch mit steigender Konzentration an kationischem Initiator (DPI-TTA). Der Verlauf der Abhängigkeit lässt vermuten, dass die minimale Schichtdicke, die mit diesem System erreichbar ist, nicht viel niedriger als 0,75 mm liegt.

### Beispiel 45 - Anwendungsbeispiel "chemischer Dübel"

Chemische Dübel sind Formulierungen, die die Fixierung von Schrauben, Bolzen, Gewindestangen und dergleichen in Bohrlöchern erlauben. Dabei kann man entweder zwischen schneller Reaktionsgeschwindigkeit und kurzer Topfzeit oder langer Topfzeit gepaart mit dem Nachteil einer sehr langen Reaktionszeit wählen. Der Einsatz von Formulierungen, die mittels radikalinduzierter, kationischer Frontalpolymerisation (RICFP) ausgehärtet werden können, als Masse für chemische Dübel ist daher vorteilhaft, da er lange Topfzeit mit sehr schneller Aushärtung kombiniert. Die Initiierung der Reaktion kann dabei entweder durch Bestrahlung mit (UV-)Licht oder durch lokale Applikation von Hitze (beispielsweise durch einen Lötkolben oder eine Heißluftpistole) möglich.

### Formulierung

Eine typische Formulierung dafür besteht aus einem Epoxidharz, wie z.B. Bisphenol-A-diglycidylether, einem kationischen Photoinitiator, wie z.B. dem erfindungsgemäßen Initiator DPITTA, und einem radikalischen thermischen Initiator, wie z.B. Benzpinakol. Für die Herstellung der Formulierung werden die Initiatoren in einer möglichst geringen Menge an Dichlormethan gelöst und anschließend mit dem Harz vermischt. Unter Rühren bei 50 °C wird das Dichlormethan anschließend im Vakuum restlos entfernt.

**Tabelle 9: Typische Formulierung für ein nicht vorbehandeltes Bohrloch**

| **Komponente** | **Konzentration [Mol-%]** | **Masse [g]** | **Anmerkung** |
|---|---|---|---|
| Bisphenol-A-diglycidylether | - | 27,23 | BADGE |
| Diphenyliodonium-tetrakis(perfluor-tert-butyl)-aluminat | 0,5 | 0,50 | DPI TTA |
| 1,1,2,2-Tetraphenylethandiol | 4,0 | 1,17 | TPED, Benzpinakol |
| 3-Glycidoxypropyl-trimethoxysilan | 7,2 | 1,36 | GPTMS Primer |

### Vorbereitung der Bohrlöcher

Mit einer Schlagbohrmaschine wurden Löcher mit einem Durchmesser von 14 mm in Granit, Beton und Ziegel gebohrt. Anschließend wurden die Bohrlöcher mit Druckluft ausgeblasen, um sie von anhaftendem Staub zu befreien. Da die Haftung zwischen Stein und Epoxidformulierung unter Umständen unzureichend ist, besteht die Möglichkeit, diese durch Einsatz eines Primers zu verbessern. Dabei kann der Primer entweder der Formulierung beigemischt oder vorab in die Bohrlöcher appliziert werden. Als Primer diente im vorliegenden Fall 3-Glycidoxypropyltrimethoxysilan.

### Methode A: Direktes Vorbehandeln der Bohrlöcher

Als Vorbehandlung wurde eine Formulierung, umfassend 50 ml Ethanol (96 %), 0,23 ml 3-Glycidoxypropyltrimethoxysilan sowie 1,5 ml verdünnte Essigsäure (Eisessig-Wasser, 1:10) hergestellt. Mit dieser Lösung wurden die Bohrlöcher zur Gänze gefüllt, und sie wurde darin rund eine Stunde lang bei Raumtemperatur einwirken gelassen. Anschließend wurden die Steine (jeweils Beton, Granit und Ziegel) über Nacht in einem Ofen bei 60 °C gehalten. Die Lösung war am nächsten Tag vollständig aufgetrocknet. Bohrlöcher, die einer solchen Vorbehandlung unterzogen wurden, werden nachstehend als "geprimed" bezeichnet.

### Methode B: Zugabe des Primers zur Reaktionsformulierung

Zu der oben beschriebenen Harzformulierung wurden gemeinsam mit den Initiatoren zusätzlich 5 Gew.-% 3-Glycidoxypropyl-trimethoxysilan hinzugefügt. Nach Zugabe des Harzes wurde das Lösungsmittel abgezogen und die Formulierung entgast.

### Gewindestangen

Für die Befestigung von Gewindestangen in den Gesteinen wurden die Gewindestangen (12 mm Durchmesser) auf 11 cm abgelängt und die Kanten entgratet. Aus der Größe des Bohrlochs (14 mm) und dem Durchmesser der Gewindestangen ergibt sich ein Ringspalt von 1 mm.

### Polymerisation

Etwa die Hälfte des Volumens der Bohrlöcher wurde mit der Reaktionsformulierung gefüllt und anschließend die Gewindestange mittig platziert. Danach wurde die Reaktion durch Bestrahlung der sichtbaren Fläche der Formulierung gestartet. Dabei wurde mit einer UV-Vis-Lichtquelle, ausgestattet mit einem 320-500 nm Filter, über einen flüssigkeitsgefüllten Lichtwellenleiter mit 8 mm Durchmesser bestrahlt. Die Bestrahlungsintensität am Ausgang des Lichtwellenleiters wurde auf 3 W/cm² eingestellt.

### Zugfestigkeitsversuche

Um die Haftung des Polymers zwischen Gewindestange und Gestein zu testen, wurden die erhaltenen Proben anschließend mittels einer Zugprüfmaschine (Zwick Z250) untersucht. Dazu wurde an den Gewindestangen eine weitere Gewindestange mittels zweier Muttern befestigt, die anschließend in die Zugprüfmaschine eingespannt wurde. Das Gestein wurde durch über ein Widerlager darunter befestigt.

Die Prüfung erfolgte mit einer Geschwindigkeit von 10 mm/min. Die dabei typischerweise maximal notwendigen Kräfte sind in Tabelle 10 aufgelistet. Es ist dabei festzuhalten, dass zwischen der Zugabe des Primers in die Formulierung und der Vorbehandlung der Bohrlöcher kein signifikanter Unterschied zu erkennen war. Weiters wurden stets Teile des Ziegels beim Versuch des Herausreißens zerstört.

**Tabelle 14: zum Entfernen der Gewindestangen aus dem Bohrloch erforderliche Kraft**

| **Material** | **Maximale Kraft [N]** |
|---|---|
| Beton | 1100 |
| Ziegel | 1050 |
| Granit | 500 |

Zusammenfassend wurde hinreichend belegt, dass Benzpinakol einen hervorragend für die radikalisch induzierte kationische Frontalpolymerisation von kationisch polymerisierbaren Monomeren geeigneten Initiator darstellt.

## Patentansprüche

1. Verfahren zur radikalisch induzierten kationischen Frontalpolymerisation von kationisch polymerisierbaren Monomeren mittels einer Kombination aus zumindest einem kationischen Polymerisationsinitiator und zumindest einem Aktivator für den zumindest einen Initiator,
**dadurch gekennzeichnet, dass** als Aktivator Benzpinakol eingesetzt wird.

2. Verwendung von Benzpinakol als Aktivator für kationische Polymerisationsinitiatoren bei der radikalisch induzierten kationischen Frontalpolymerisation von kationisch polymerisierbaren Monomeren.

3. Verfahren nach Anspruch 1 oder Verwendung nach Anspruch 2, **dadurch gekennzeichnet, dass** der oder die kationische(n) Polymerisationsinitiator(en) aus lodonium-, Phosphonium-, Sulfonium-, Ferrocenium- und Diazoniumsalzen, insbesondere arylsubstituierten Vertretern davon, ausgewählt ist/sind.

4. Verfahren oder Verwendung nach Anspruch 3, **dadurch gekennzeichnet, dass** als kationischer Polymerisationsinitiator ein Diaryliodoniumsalz eingesetzt wird.

5. Verfahren oder Verwendung nach Anspruch 4, **dadurch gekennzeichnet, dass** als kationischer Polymerisationsinitiator (4-Octyloxyphenyl)(phenyl)iodonium-hexafluoroantimonat, (4-Isopropylphenyl)(4'-methylphenyl)iodonium-tetrakis(pentafluorphenyl)borat oder Diphenyliodonium-tetrakis(perfluor-t-butyloxy)aluminat eingesetzt wird.

6. Verfahren oder Verwendung nach Anspruch 5, **dadurch gekennzeichnet, dass** als kationischer Polymerisationsinitiator Diphenyliodonium-tetrakis(perfluor-t-butyloxy)aluminat eingesetzt wird.

7. Verfahren oder Verwendung nach einem der vorangegangenen Ansprüche, **dadurch gekennzeichnet, dass** die kationische Polymerisation als ringöffnende Polymerisation durchgeführt wird.

8. Verfahren oder Verwendung nach Anspruch 7, **dadurch gekennzeichnet, dass** als kationisch polymerisierbare Monomere ein- oder mehrwertige Epoxide (Oxirane), Thiirane (Episulfide), Oxetane, Lactame, Lactone, Lactid, Glykolid, Tetrahydrofuran oder Gemische davon eingesetzt werden.

9. Verfahren oder Verwendung nach Anspruch 8, **dadurch gekennzeichnet, dass** als kationisch polymerisierbare Monomere ein oder mehrere mehrwertige Epoxide eingesetzt wird/werden.

10. Verfahren oder Verwendung nach einem der Ansprüche 1 bis 6, **dadurch gekennzeichnet, dass** als kationisch polymerisierbare Monomere ein oder mehrere mehrwertige Vinylether eingesetzt wird/werden.

11. Verfahren oder Verwendung nach einem der vorangegangenen Ansprüche, **dadurch gekennzeichnet, dass** ein Gemisch aus kationisch und radikalisch polymerisierbaren Monomeren, gegebenenfalls unter Zusatz eines weiteren radikalischen Initiators, polymerisiert wird.

12. Verfahren oder Verwendung nach einem der vorangegangenen Ansprüche, **dadurch gekennzeichnet, dass** eine oder mehrere zusätzliche Komponenten, ausgewählt aus weiteren Photoinitiatoren, Sensibilisatoren, Stabilisatoren, Modifikatoren, Reglern, Lösungsmitteln, Füllstoffen, Farbstoffen, Pigmenten und Gemischen davon eingesetzt werden.

## Claims

1. A process for free radical-induced cationic frontal polymerization of cationically polymerizable monomers using a combination of at least one cationic polymerization initiator and at least one activator for said at least one initiator,
**characterized in that** benzopinacol is used as said activator.

2. A use of benzopinacol as an activator for cationic polymerization initiators in a free radical-induced cationic frontal polymerization of cationically polymerizable monomers.

3. The process according to claim 1 or the use according to claim 2, **characterized in that** said cationic polymerization initiator(s) is/are selected from iodonium, phosphonium, sulfonium, ferrocenium or diazonium salts, in particular from aryl-substituted representatives thereof.

4. The process or the use according to claim 3, **characterized in that** a diaryliodonium salt is used as said cationic polymerization initiator.

5. The process or the use according to claim 4, **characterized in that** (4-octyloxyphenyl)(phenyl)iodonium-hexafluoroantimonate,(4-isopropylphenyl)(4'-methylphenyl)-iodonium-tetrakis(pentafluorophenyl)borate, or diphenyliodonium-tetrakis(perfluoro-t-butyloxy)aluminate is used as said cationic polymerization initiator.

6. The process or the use according to claim 5, **characterized in that** diphenyliodonium-tetrakis(perfluoro-t-butyloxy)aluminate is used as said cationic polymerization initiator.

7. The process or the use according to any one of the preceding claims, **characterized in that** said cationic polymerization is carried out as a ring-opening polymerization.

8. The process or the use according to claim 7, **characterized in that** mono- or multivalent epoxides (oxiranes), thiiranes (episulfides), oxetanes, lactames, lactones, lactide, glycolide, tetrahydrofurane, or mixtures thereof are used as said cationically polymerizable monomers.

9. The process or the use according to claim 8, **characterized in that** one or more multivalent epoxides are used as said cationically polymerizable monomers.

10. The process or the use according to any one of the claims 1 to 6, **characterized in that** one or more multivalent vinyl ethers are used as said cationically polymerizable monomers.

11. The process or the use according to any one of the preceding claims, **characterized in that** a mixture of cationically and radically polymerizable monomers is polymerized, optionally by adding a further free radical initiator.

12. The process or the use according to any one of the preceding claims, **characterized in that** one or more additional components selected from further photoinitiators, sensitizers, stabilizers, modifiers, regulators, solvents, fillers, dyes, pigments, and mixtures thereof are used.

## Revendications

1. Procédé pour la polymérisation frontale cationique de monomères polymérisables par voie cationique, induite par des radicaux libres moyennant une combinaison d'au moins un initiateur de polymérisation cationique et au moins un activateur pour ledit au moins un initiateur,
**caractérisé en ce que** le benzopinacol est employé comme activateur.

2. Utilisation de benzopinacol comme activateur pour des initiateurs cationiques de polymérisation lors de la polymérisation frontale cationique de monomères polymérisables par voie cationique, induite par des radicaux libres.

3. Procédé selon la revendication 1 ou utilisation selon la revendication 2, caractérisé(e) en ce que le(s) initiateur(s) cationique(s) de polymérisation est/sont choisi(s) parmi des sels de iodonium, phosphonium, sulfonium, ferrocénium et de diazonium, notamment leurs représentants substitués par aryle.

4. Procédé ou utilisation selon la revendication 3, caractérisé(e) en ce qu'un sel de diaryliodonium est utilisé comme initiateur cationique de polymérisation.

5. Procédé ou utilisation selon la revendication 4, caractérisé(e) en ce que le (4-octyloxyphényl)(phényl)iodonium-hexafluoroantimonate, le (4-isopropylphényl)-(4'-methylphényl)iodonium-tétrakis(pentafluorophényl)borate ou le diphényliodonium-tétrakis(perfluoro-t-butyloxy)aluminate est employé comme l'initiateur cationique de polymérisation.

6. Procédé ou utilisation selon la revendication 5, caractérisé(e) en ce que le di-phényliodonium-tétrakis(perfluoro-t-butyloxy)aluminate est utilisé comme l'initiateur cationique de polymérisation.

7. Procédé ou utilisation selon l'une quelconque des revendications précédentes, caractérisé(e)s en ce que la polymérisation cationique est effectuée sous forme de polymérisation par ouverture de cycle.

8. Procédé ou utilisation selon la revendication 7, caractérisé(e) en ce que des époxydes mono- ou polyvalents (oxiranes), des thiiranes (episulfures), des oxétannes, des lactames, des lactones, du lactide, du glycolide, du tétrahydrofurane ou des mélanges de ceux-ci sont employés comme monomères polymérisables par voie cationique.

9. Procédé ou utilisation selon la revendication 8, caractérisé(e) en ce que un ou plusieurs époxydes polyvalents est/sont employé(s) comme monomère(s) polymérisable(s) par voie cationique.

10. Procédé ou utilisation selon une quelconque des revendications 1 à 6, caractérisé(e) en ce que un ou plusieurs éther(s) vinylique(s) est/sont employé(s) comme monomère(s) polymérisable(s) par voie cationique.

11. Procédé ou utilisation selon une quelconque des revendications précédentes, caractérisé(e) en ce qu'un mélange de monomères polymérisables par voie cationique est polymérisé, éventuellement avec addition d'un autre initiateur à radicaux libres.

12. Procédé ou utilisation selon une quelconque des revendications précédentes, caractérisé(e) en ce qu'un ou plusieurs autres composants, choisis parmi d'autres photoamorceurs, sensibilisateurs, stabilisateurs, modificateurs, régulateurs, solvants, charges, colorants, pigments ou mélanges de ceux-ci, est/sont employé(s).
